# EUROPÄISCHE PATENTANMELDUNG

(11) **EP 1 286 458 A1**
(43) Veröffentlichungstag der Anmeldung: **26.02.2003**
(21) Anmeldenummer: 01890243.7
(22) Anmeldetag: 22.08.2001
(51) Int. Cl.: H02P 7/63, F04D 15/00

(54) **Verfahren und Vorrichtung zur Regelung von Kreiselarbeitsmaschinen**

(71) Anmelder: Pumpenfabrik Ernst Vogel Gesellschaft m.b.H., 2000 Stockerau (AT)
(72) Erfinder: Sacher, Manfred, Ing., 1190 Wien (AT)
(74) Vertreter: Margotti, Herwig Franz

(57) **Zusammenfassung**

Die Erfindung betrifft eine Vorrichtung und ein Verfahren zur Regelung der Drehzahl eines Elektromotors (10), mit welchem eine Kreiselarbeitsmaschine (6), insbesondere eine Pumpe oder ein Ventilator, angetrieben wird, entsprechend dem auf der Verbraucherseite (4,8) zeitlich variablen Leistungsbedarf an die Kreiselarbeitsmaschine, wobei ein Regler (16) verwendet wird, durch dessen Ausgangsgröße die Drehzahl des Elektromotors (10) festgelegt wird. Das erfindungsgemäße Verfahren ist dadurch gekennzeichnet, dass die jeweilige aufgenommene elektrische Leistung (P) des Elektromotors (10) gemessen und ein die gemessene elektrische Leistung repräsentierendes Signal erzeugt wird und dieses Signal dem Regler (16) als Eingangsgröße zugeführt wird, wo es nach einer vorgegebenen oder aktuell berechneten Kennlinie (P_{Anlage}(Q)) in die gewünschte Ausgangsgröße umgesetzt wird.

## Beschreibung

Die Erfindung betrifft ein Verfahren und eine Vorrichtung zur Regelung der Drehzahl eines Elektromotors, mit welchem eine Kreiselarbeitsmaschine, insbesondere eine Pumpe oder ein Ventilator, angetrieben wird, entsprechend dem auf der Verbraucherseite zeitlich variablen Leistungsbedarf an die Kreiselarbeitsmaschine, wobei ein Regler verwendet wird, durch dessen Ausgangsgröße die Drehzahl des Elektromotors festgelegt wird.

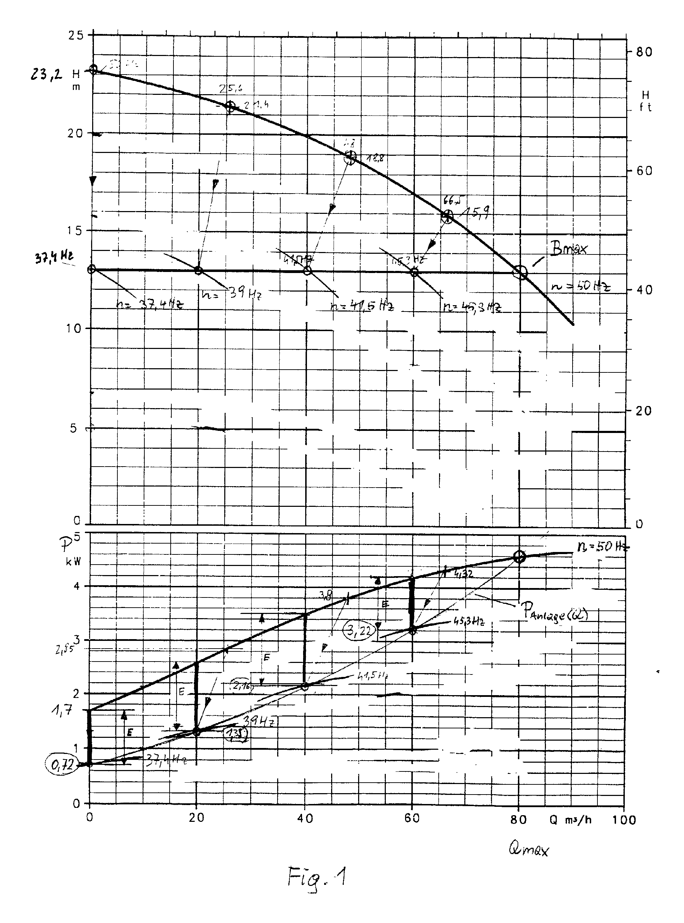

Mit einem Elektromotor angetriebene Kreiselarbeitsmaschinen wie Pumpen, Ventilatoren bzw. Lüfter, Gebläse, Verdichter usw. werden häufig in Anlagen eingesetzt, in welchen sich die von der Anlage her geforderte Leistung der Kreiselarbeitsmaschine über die Zeit verändert. Dies ist beispielsweise bei Ventilatoren in Klimaanlagen oder bei Pumpen in Heizungsanlagen der Fall. Hier wird die volle Förderleistung nur dann benötigt, wenn alle Verbraucher zugeschaltet sind. Im praktischen Betrieb werden jedoch die Verbraucher, zum Beispiel einzelne Heizkörper oder Teilbereiche der Klimaanlage, zu gewissen Zeiten nur reduziert betrieben oder ganz abgeschaltet, so dass sich zeitlich variabel ganz unterschiedliche Betriebszustände mit unterschiedlichem Förderleistungsbedarf ergeben. Die maximale Leistung der Kreiselarbeitsmaschine(n) in einer solchen Anlage muss jedoch stets so bemessen werden, dass alle in der Anlage befindlichen Verbraucher auch dann ausreichend versorgt werden können, wenn sie gleichzeitig mit maximalem Bedarf eingeschaltet sind. Wird die Kreiselarbeitsmaschine permanent, das heißt auch bei reduziertem Leistungsbedarf, mit der vollen Leistung betrieben, so wird - unnötigerweise - durchgehend die jeweils maximale Energie verbraucht, indem die Förderleistung der Maschine über das erforderliche Maß hinaus angehoben wird. Dieses Verhalten ist anhand einer Flüssigkeitskreiselpumpe im oberen Teil des Diagramms von Fig. 1 zu sehen, das eine Schar von Pumpenkennlinien der Kreiselpumpe darstellt, das heißt, die Förderhöhe H als Funktion der Fördermenge Q bei einer bestimmten Drehzahl n. In diesem Diagramm ist nur die Pumpenkennlinie für eine Drehzahl der Pumpe von n = 50 Hz vollständig dargestellt, weitere Pumpenkennlinien bei n = 45,3 Hz, n = 41,5 Hz, n = 39 Hz und n = 37,4 Hz sind nur als Kurvenstücke gezeigt.

Die Dimensionierung der erforderlichen Leistung einer solchen Kreiselpumpe in einer Anlage ergibt sich durch Festlegung eines Betriebspunkts Bmax, der sich als der Schnittpunkt einer geforderten maximalen Fördermenge Qmax (in diesem Beispiel 80 m³/h), wenn alle Verbraucher vollständig zugeschaltet sind, und der bei dieser Fördermenge Qmax für einen reibungslosen Betrieb der Anlage erforderlichen Förderhöhe H (in diesem Beispiel 13 m) darstellt. Die diesen Betriebspunkt Bmax schneidende Pumpenkennlinie (in diesem Beispiel jene für n = 50 Hz) gibt die maximale Drehzahl der Pumpe an, die notwendig ist, um bei einem Verbrauch von 100% (=Qmax) die erforderliche Förderhöhe aufrecht zu erhalten. Sinkt jedoch der tatsächliche Verbrauch in der Anlage, so erhöht sich bei einem Betrieb der Pumpe mit gleichbleibender Drehzahl n = 50 Hz die Förderhöhe H, d.h. der momentane Betriebspunkt wandert entlang der Pumpenkennlinie nach links, wie anhand dreier willkürlicher Punkte dargestellt, die Verbräuche von 66,5 m³/h, 48 m³/h und 25,6 m³/h repräsentieren, wofür sich Förderhöhen von 15,9 m, 18,8 m und 21,4 m einstellen, die weit über den geforderten 13 m liegen. Man erkennt also, dass eine solcherart betriebene Anlage äußerst unwirtschaftlich läuft. Zudem können störende Strömungsgeräusche entstehen, wenn die Leistung wesentlich über der in der Anlage tatsächlich benötigten liegt.

Es ist daher zur Optimierung des Energieverbrauchs und des Lärmverhaltens vorteilhaft, die jeweilige Leistung der Kreiselarbeitsmaschine entsprechend der aktuell geforderten Arbeitsleistung zu regeln. Da die Arbeitsleistung einer Kreiselarbeitsmaschine von deren Drehzahl abhängt, ist es ein übliches Verfahren, zur Regelung der Leistung die Drehzahl der Kreiselarbeitsmaschine bzw. des sie antreibenden Elektromotors zu regeln. Wieder auf das Förderhöhen/Fördermengen-Diagramm von Fig. 1 Bezug nehmend ist darin dargestellt, wie sich die Drehzahl der Pumpe verändern muss, um bei variierenden Verbräuchen eine konstante Förderhöhe H von 13 m beizubehalten. Um eine solche Regelung zu realisieren, ist es bekannt, am Pumpenausgang einen Drucksensor zu installieren, dessen Ausgangssignal proportional zur Förderhöhe ist. Dieses Ausgangssignal wird einer Regelschaltung (beispielsweise einem PID-Regler) als Ist-Wert zugeführt. Der Soll-Wert der Regelschaltung wird durch ein für die gewünschte Förderhöhe repräsentatives Signal gebildet. Stellt der Regler fest, dass die momentane Förderhöhe über dem Soll-Wert liegt, so liefert er ein Ausgangssignal an einen Drehzahlversteller (z.B. einem Frequenzumrichter) des Pumpenmotors, die Drehzahl des Motors zu reduzieren. Eine Reduzierung der Drehzahl des Motors und damit der Pumpe führt zu einer Reduzierung der Förderhöhe, gleichzeitig aber auch zu einer Reduzierung der Fördermenge. Ein Betriebspunkt einer bestimmten Pumpenkennlinie "wandert" nämlich bei Veränderung der Drehzahl entlang einer Parabel zu einer neuen Lage auf der Pumpenkennlinie der neuen Drehzahl. Dies ist im Diagramm anhand der Betriebspunkte auf der Pumpenkennlinie für n = 50 Hz für Förderhöhen H = 15,9 m, 18,8 m und 21,4 m dargestellt. Verringert man die Drehzahl der Pumpe, bis jeweils die gewünschte Förderhöhe von H = 13 m erreicht wird, so liegen die neuen Betriebspunkte auf den Pumpenkennlinien für n = 45,3 Hz, n = 41,5 Hz bzw. n = 39 Hz. Es ist anzumerken, dass die Veränderung der Betriebspunkte entlang von Parabeln im Diagramm durch Geradenstrecken nur angenähert dargestellt ist. Unter Einsatz des erwähnten Reglers ist es möglich, für jede momentane Fördermenge die Drehzahl so anzupassen, dass sich die erwünschte Förderhöhe der Pumpe einstellt.

Durch eine Regelung der Pumpe auf eine konstante Förderhöhe ergibt sich gegenüber dem Betrieb der Pumpe bei konstanter Drehzahl eine Energieeinsparung, die im Leistungsaufnahme/Fördermengen-Diagramm im unteren Teil von Fig. 1 dargestellt ist. Die jeweilige Energieeinsparung wird durch die Maßpfeile E für die ausgewählten Betriebspunkte repräsentiert. Man erkennt, dass Energieeinsparungen bis zu 50 % gegenüber dem nicht-geregelten Pumpenbetrieb erzielt werden.

Die geschilderte Regelung einer Kreiselpumpe auf konstante Förderhöhe stellt zwar einen guten Ansatz zur Reduzierung des Energieverbrauchs dar, ist aber für geschlossene Systeme, in denen ein Fluid zirkuliert, noch nicht optimal. Diese geschlossenen Systeme zeichnen sich im Allgemeinen dadurch aus, dass sie eine Anlagenkennlinie aufweisen, die nicht linear verläuft, sondern bei steigenden Fördermengen überproportional ansteigende Förderhöhen aufweist, was im Wesentlichen auf die zunehmenden Widerstände (Reibung, Wirbel etc.) in den Rohrleitungen zurückzuführen ist. Beispielsweise kann in einem Zentralheizungssystem bei nur wenigen geöffneten Heizkörpern die Förderhöhe der Heizungspumpe niedrig sein, um dennoch ausreichend Heizmedium durch die offenen Heizkörper zirkulieren zu lassen; sind jedoch alle Heizkörper geöffnet, so muss die Förderhöhe der Pumpe überproportional angehoben werden, um zu gewährleisten, dass auch der von der Heizungspumpe am weitesten entfernte Heizkörper trotz der unvermeidlichen Druckverluste in den Zu- und Ableitungen noch ausreichend mit Heizmedium durchströmt wird.

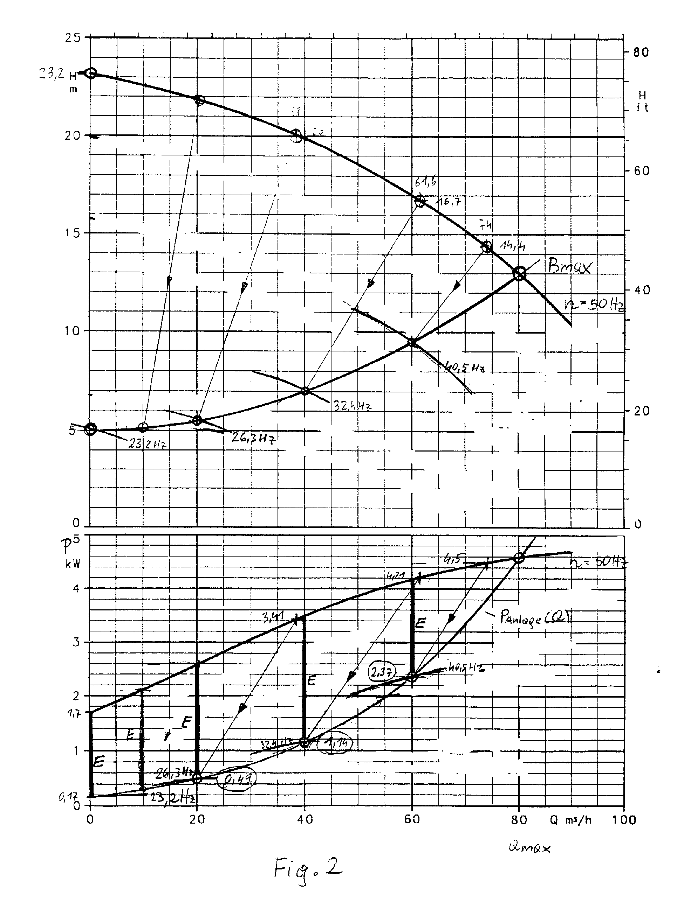

Das Verhalten einer solchen Anlage ist in den Diagrammen von Fig. 2 dargestellt, bei der die Anlagenkurve, d.h. die notwendige Förderhöhe in Abhängigkeit von der Fördermenge, etwa quadratisch mit der Fördermenge ansteigt. Als Maximalverbrauch Qmax wurden 80 m³/h definiert (siehe Betriebspunkt Bmax); die durch Bmax verlaufende Pumpenkennlinie gibt die maximal erforderliche Pumpendrehzahl an, die hier bei n = 50 Hz liegt. Wie schon im Diagramm von Fig. 1 sind auch in Fig. 2 eine Anzahl an willkürlichen Betriebspunkten auf der Pumpenkennlinie für n = 50 Hz und deren Verschiebung durch Drehzahlreduzierung bis zur Anlagenkennlinie aufgetragen. Man erkennt aus dem Vergleich zwischen den Diagrammen von Fig. 1 und Fig. 2, dass bei dem etwa quadratisch ansteigenden Verlauf der Anlagenkennlinie gemäß Fig. 2 eine wesentlich größere Energieeinsparung (siehe Maßpfeile E im Leistungsaufnahme/Fördermengen-Diagramm) möglich ist als bei der in Fig. 1 dargestellten waagrechten Anlagenkennlinie, d.h. der geschilderten konstanten Förderhöhe über die gesamte Fördermenge.

Aus den obigen Diagrammen ergibt sich eindeutig, dass die Berücksichtigung der tatsächlichen Anlagenkennlinie vom Standpunkt des Energieverbrauchs äußerst vorteilhaft ist. In der praktischen Ausführung ergeben sich jedoch Probleme. Während nämlich für eine Regelung einer Pumpendrehzahl auf konstante Förderhöhe nur ein Drucksensor am Pumpenausgang als Ist-Wert-Fühler erforderlich ist, wird für eine variable Anlagenkennlinie ein Druckdifferenz-Sensor benötigt. Dieser ist jedoch ein sehr teures Bauteil, dessen Kosten ca. 70 % des gesamten Regelgeräts ausmachen. Daher wurde bis jetzt trotz der unbestrittenen technischen Vorteile oftmals auf eine variable Regelung verzichtet.

Es ist bekannt, anstelle von Druckdifferenz-Sensoren Durchflussmesser zu verwenden, um die Pumpenleistung direkt in Abhängigkeit vom Fluid-Durchfluss zu regeln, vom Kostenstandpunkt ist aber auch diese Lösung vielfach unannehmbar.

Um die Probleme der hohen Preise von Druckdifferenz-Sensoren zu umgehen, wird in der DE 44 23 736 A1 ein Verfahren zur Regelung der Leistung einer durch einen Elektromotor angetriebenen Kreiselarbeitsmaschine, wie z.B. einer Pumpe oder eines Ventilators, entsprechend der seitens von Verbrauchern momentan geforderten Leistung vorgeschlagen. Hierzu wird die jeweilige Stromstärke des Motorstroms des Elektromotors gemessen und als Eingangsgröße für einen Regler verwendet, der in Abhängigkeit der gemessenen Stromstärke entsprechend einer vorgegebenen Kennlinie eine Ausgangsgröße zur Regelung der Drehzahl erzeugt. Auf diese Weise kann beispielsweise eine Druckdifferenz-Messung zur Ermittlung der geforderten Leistung durch eine Strommessung ersetzt werden. Ausgangspunkt dieser bekannten Lösung ist die Überlegung, dass der Motorstrom des Elektromotors beim Antrieb einer Kreiselarbeitsmaschine von der momentan von dieser geforderten Leistung abhängt und sich somit direkt zur Drehzahlregelung heranziehen läßt. Dieser vermutete Zusammenhang zwischen Motorstrom und erforderlicher Arbeitsleistung einer Kreiselmaschine stellt jedoch eine grobe Vereinfachung der tatsächlichen Verhältnisse dar, die eine solche Regelung in der Praxis oft wenig wirksam macht, wenn nämlich der angenäherte Zusammenhang zwischen Motorstrom und Arbeitsleistung der Kreiselmaschine zu weit von den tatsächlichen Verhältnissen abweicht.

Die vorliegende Erfindung geht daher von einem anderen Ansatz aus, der sich nicht auf bloß angenäherte Verhältnisse stützt, sondern auf echte mathematische Zusammenhänge. Es lassen sich nämlich Funktionen der Leistungsaufnahme eines Elektromotors zum Antrieb einer Kreiselarbeitsmaschine in Abhängigkeit von der momentanen Arbeitsleistung der Kreiselarbeitsmaschine ableiten. Als Ergebnis erhält man beispielsweise die in den Figuren 1 und 2 der vorliegenden Erfindung dargestellten Kurvenscharen der Leistungsaufnahme eines Elektro-Antriebsmotors in Abhängigkeit von der Fördermenge und der Drehzahl einer von ihm angetriebenen Kreiselpumpe. Aus dem flachen Verlauf dieser Kurvenscharen (siehe insbesondere die vollständig dargestellte Leistungskurve für eine Drehzahl der Pumpe von n = 50 Hz) wird auch verständlich, warum die in der DE 44 23 736 A1 vorgeschlagene Strommessung nicht zufriedenstellend funktionieren kann, denn sie geht davon aus, dass die Versorgungsspannung des Elektromotors vollkommen konstant gehalten wird. Dies trifft in der Praxis jedoch nicht zu, insbesondere nicht im industriellen Bereich; weiters sorgt der Elektromotor bei Lastwechseln selbst für Spannungsschwankungen. Veränderungen der Versorgungsspannung von bereits 1 bis 2 % machen in Anbetracht des flachen Verlaufs der Leistungskurven und damit einhergehend einer vervielfachten Verfälschung des scheinbaren Betriebspunktes auf der Leistungskurve eine auf Strommessung basierende Regelung unwirksam.

Erfindungsgemäß wird daher ein Verfahren zur Regelung der Drehzahl eines Elektromotors vorgeschlagen, mit welchem eine Kreiselarbeitsmaschine, insbesondere eine Pumpe oder ein Ventilator, angetrieben wird, entsprechend dem auf der Verbraucherseite zeitlich variablen Leistungsbedarf an die Kreiselarbeitsmaschine, wobei ein Regler verwendet wird, durch dessen Ausgangsgröße die Drehzahl des Elektromotors festgelegt wird, wobei die jeweilige aufgenommene elektrische Leistung des Elektromotors gemessen und ein die gemessene elektrische Leistung repräsentierendes Signal erzeugt wird und dieses Signal dem Regler als Eingangsgröße zugeführt wird, wo es nach einer vorgegebenen oder aktuell berechneten Leistungskennlinie in die gewünschte Ausgangsgröße umgesetzt wird.

Zweckmäßig wird zur Steuerung der Drehzahl des Elektromotors ein Frequenzumrichter verwendet, wobei die Leistungsmessung in die Elektronik des Frequenzumrichters integriert sein kann. Alternativ dazu kann die Leistungsmessung zwischen dem Frequenzumrichter und dem Elektromotor erfolgen.

Die Erfindung betrifft auch eine Vorrichtung zur Ausführung des oben dargelegten Verfahrens mit einem eine Kreiselarbeitsmaschine antreibenden Elektromotor, einer Steuereinrichtung für die Drehzahl des Elektromotors und einem Regler, dessen Regelausgang mit dem Steuerungseingang der Steuereinrichtung verbunden ist. Die erfindungsgemäße Vorrichtung ist dadurch gekennzeichnet, dass dem Elektromotor ein Leistungsmessgerät zur Messung der aufgenommenen elektrischen Leistung des Motors vorgeschaltet ist, dessen Signalausgang mit dem Eingang des Reglers verbunden ist.

In Bezug auf einfache Regelbarkeit ist es vorteilhaft, wenn die Steuereinrichtung ein Frequenzumrichter ist. In die Elektronik des Frequenzumrichters kann ein Leistungsmessgerät integriert sein, wodurch sich eine kompakte, betriebssichere Ausführungsform ergibt.

Der Regler wiederum wird für universelle Einsetzbarkeit und leichte Änderung von Regelparametern vorteilhaft unter Verwendung eines digitalen Regelgeräts realisiert.

Um zusätzliche Berechnungsschaltungen zur Feststellung des momentanen Betriebspunkts der Kreiselarbeitsmaschine vermeiden zu können, soll die Kreiselarbeitsmaschine Leistungskennlinien mit streng monotonem Verlauf aufweisen. Radialpumpen und -lüfter besitzen monoton ansteigende Leistungskennlinien, während Axialpumpen und -lüfter monoton fallende Leistungskennlinien aufweisen. Beide Typen von Kreiselarbeitsmaschinen können in der Erfindung Verwendung finden.

Zur näheren Erläuterung der Erfindung werden im Folgenden unter Bezugnahme auf die beiliegenden Zeichnungen einige Ausführungsformen beschrieben. In den Zeichnungen zeigen Fig. 1 und 2 jeweils Diagramme von Pumpenkennlinien, d.h. Förderhöhe in Abhängigkeit von der Fördermenge, und Leistungsaufnahmekennlinien des Pumpenmotors in Abhängigkeit von der Pumpen-Fördermenge. Fig. 3 zeigt in schematischer Darstellung eine Heizungsanlage mit einer Heizpumpe und einer erfindungsgemäßen Anordnung zur Regelung der Drehzahl dieser Heizpumpe.

Die Pumpen-Förderhöhen/Fördermengen-Diagramme der Figuren 1 und 2 wurden bereits in der Einleitung ausführlich erörtert, ebenso wurde anhand der Leistungsaufnahme/Fördermengen-Diagramme dieser Figuren dargelegt, welche Energieeinsparungen E bei Regelung der Drehzahl einer Kreiselpumpe im Vergleich mit einem Betrieb der Pumpe bei konstanter Drehzahl möglich ist.

Nunmehr wird anhand der Leistungsaufnahme/Fördermengen-Diagramme der Figuren 1 und 2 das erfindungsgemäße Regelungsverfahren erörtert.

Für jede Drehzahl einer Kreiselpumpe ergibt sich eine charakteristische Kurve der elektrischen Leistungsaufnahme eines die Kreiselpumpe antreibenden Elektromotors in Abhängigkeit von der Fördermenge der Kreiselpumpe, so dass das Leistungsaufnahme/Fördermengen-Diagramm tatsächlich aus Kurvenscharen diskreter Leistungsaufnahmekurven für die verschiedenen Pumpendrehzahlen besteht. In Fig. 1 und 2 sind die Leistungsaufnahmekurven für eine Pumpendrehzahl von n = 50 Hz vollständig dargestellt; andere Leistungsaufnahmekurven (n = 37,4 Hz, n = 39 Hz, n = 41,5 Hz, n = 45,3 Hz in Fig. 1; n = 23,2 Hz, n = 26,3 Hz, n = 32,4 Hz, n = 40,5 Hz in Fig. 2) sind nur stückweise in interessierenden Abschnitten dargestellt. Weiters läßt sich analog zur einleitend erläuterten Funktion der Förderhöhe in Abhängigkeit von der Fördermenge auch eine Funktion P_{Anlage}(Q) der Motor-Leistungsaufnahme in Abhängigkeit von der Pumpen-Fördermenge definieren, die von Parametern der gesamten Anlage bestimmt wird. Weiters gilt, dass Betriebspunkte, die auf einer bestimmten Leistungsaufnahmekennlinie liegen, bei Veränderung der Drehzahl zu einer neuen Lage auf der Leistungsaufnahmekennlinie der neuen Drehzahl "wandern", wobei der Verlauf ihrer "Wanderung" sich durch eine kubische Gleichung errechnen läßt, in der Zeichnung allerdings vereinfachend als gerade Strecke dargestellt ist. Als Beispiele für Betriebspunkte auf der Leistungsaufnahmekennlinie für n = 50 Hz finden sich in Fig. 1 jene für P = 4,32 kW, 3,8 kW und 2,85 kW, sowie in Fig. 2 jene für 4,5 kW, 4,21 kW und 3,41 kW.

Das erfindungsgemäße Verfahren zur Regelung der Drehzahl des Elektromotors, mit welchem die Kreiselpumpe angetrieben wird, läuft nun so ab, dass kontinuierlich die Leistungsaufnahme des Elektromotors gemessen wird und einem Regler ein die gemessene elektrische Leistung repräsentierendes Signal als Eingangssignal zugeführt wird. Ändert sich nun dieses Eingangssignal, was auf eine Änderung der Fördermenge zurückzuführen ist, so überprüft der Regler, ob der neue Wert der Leistungsaufnahme auf der vorgegebenen (oder auch aktuell berechneten) Anlagen-Kennlinie liegt oder davon abweicht. Bei Abweichungen erzeugt der Regler ein Ausgangssignal, das die erforderliche Nachjustierung der Drehzahl der Pumpe auf einen neuen Wert bewirkt, so dass der Elektromotor eine Leistung aufnimmt, die einem Punkt auf der Anlagenkennlinie entspricht. Unter Einsatz dieser Regelung ist es möglich, für jede momentane Fördermenge die Drehzahl der Pumpe so anzupassen, dass sich die erwünschte Leistungaufnahme des elektrischen Antriebsmotors einstellt. Als Ergebnis ist somit dasselbe Regelungsverhalten wie unter Verwendung von Druck- oder Druckdifferenz-Sensoren möglich, allerdings ohne auf diese Bauteile zurückgreifen zu müssen.

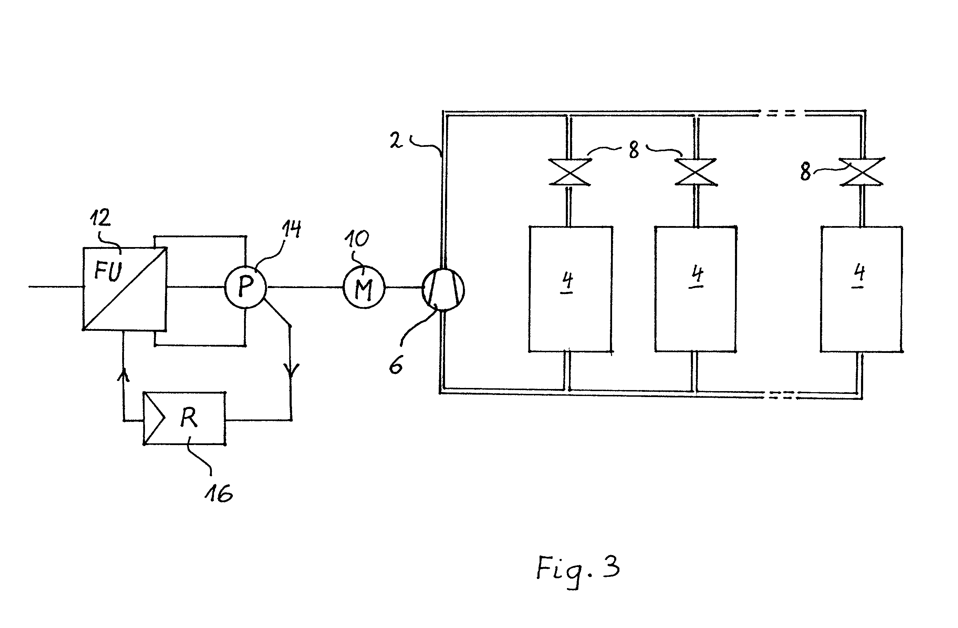

In Fig. 3 ist schematisch ein Beispiel für eine praktische Ausführungsform der Erfindung dargestellt. Es handelt sich dabei um eine Wohnhausheizungsanlage mit einer Kreiselpumpe 6 und einer erfindungsgemäßen Anordnung zur Regelung der Drehzahl dieser Kreiselpumpe. Über ein Leitungssystem 2 wird flüssiges Heizmedium zu Heizkörpern 4 gepumpt und zur Pumpe zurückgeführt, wobei die Heizkörper 4 jeweils einzeln durch Drosselventile 8 steuerbar sind, so dass sich je nach Stellung dieser Drosselventile der Durchfluss im Heizungskreislauf und damit die Fördermenge der Kreiselpumpe 6 verändern kann.

Die Pumpe 6 wird durch einen Drehstrom-Motor 10 angetrieben, dessen Drehzahl steuerbar ist. Die Steuerung der Drehzahl erfolgt in diesem Beispiel durch einen Frequenzumrichter 12. In der elektrischen Verbindungsleitung zwischen Frequenzumrichter 12 und Drehstrom-Motor 10 ist ein Leistungsmessgerät 14 angeordnet, das die elektrische Leistungsaufnahme des Motors 10 misst und ein die Leistungsaufnahme repräsentierendes Signal, wie z.B. eine elektrische Gleichspannung, liefert. Hierzu eignet sich gegebenenfalls auch ein Frequenzumrichter mit integrierter elektrischer Leistungsaufnahme-Messung und entsprechendem Signalausgang. Ferner wäre es ebenfalls möglich, die elektrische Leistungsaufnahme vor dem Frequenzumrichter zu messen, da sich der Leistungsverbrauch des Frequenzumrichters im Vergleich zu jenem des Motors kaum auf die Regelung auswirkt. Der Leistungs-Signalausgang des Leistungsmessgeräts 14 ist mit dem Eingang eines Reglers 16 verbunden. Der Ausgang des Reglers 16, der in der oben beschriebenen Weise eine die gewünschte Drehzahl bestimmende Ausgangsgröße, z.B. eine elektrische Gleichspannung zwischen 0 und 10 V oder einen Gleichstrom zwischen 4 und 20 mA liefert, ist an den Steuerungseingang des Frequenzumrichters 12 angeschlossen. Die Regelungskennlinie des Reglers 16 kann beispielsweise im Regler als Tabelle gespeichert oder als mathematische Funktion definiert sein. Der Regler 16 wiederum ist vorzugsweise ein digitales Regelgerät unter Verwendung eines Mikroprozessors. Schließlich ist noch anzumerken, dass die Art der Messung der elektrischen Leistungsaufnahme des Elektromotors 10 auf jede dem Fachmann bekannte Weise erfolgen kann und nicht spezifisch eingeschränkt ist.

## Patentansprüche

1. Verfahren zur Regelung der Drehzahl eines Elektromotors (10), mit welchem eine Kreiselarbeitsmaschine (6), insbesondere eine Pumpe oder ein Ventilator, angetrieben wird, entsprechend dem auf der Verbraucherseite (4,8) zeitlich variablen Leistungsbedarf an die Kreiselarbeitsmaschine, wobei ein Regler (16) verwendet wird, durch dessen Ausgangsgröße die Drehzahl des Elektromotors (10) festgelegt wird, **dadurch gekennzeichnet, dass** die jeweilige aufgenommene elektrische Leistung (P) des Elektromotors (10) gemessen und ein die gemessene elektrische Leistung repräsentierendes Signal erzeugt wird und dieses Signal dem Regler (16) als Eingangsgröße zugeführt wird, wo es nach einer vorgegebenen oder aktuell berechneten Kennlinie (P_{Anlage}(Q)) in die gewünschte Ausgangsgröße umgesetzt wird.

2. Verfahren nach Anspruch 1, **dadurch gekennzeichnet, dass** zur Steuerung der Drehzahl des Elektromotors (10) ein Frequenzumrichter (12) verwendet wird.

3. Verfahren nach Anspruch 2, **dadurch gekennzeichnet, dass** die elektrische Leistungsmessung innerhalb des Frequenzumrichters (12) erfolgt.

4. Verfahren nach Anspruch 2, **dadurch gekennzeichnet, dass** die elektrische Leistungsmessung zwischen dem Frequenzumrichter (12) und dem Elektromotor (10) erfolgt.

5. Vorrichtung zur Ausführung des Verfahrens gemäß Anspruch 1, mit einem eine Kreiselarbeitsmaschine (6) antreibenden Elektromotor (10), einer Steuereinrichtung (12) für die Drehzahl des Elektromotors (10) und einem Regler (16), dessen Regelausgang mit dem Steuerungseingang der Steuereinrichtung (12) verbunden ist, **dadurch gekennzeichnet, dass** dem Elektromotor (10) ein Leistungsmessgerät (14) zur Messung der aufgenommenen elektrischen Leistung (P) des Motors vorgeschaltet ist, dessen Signalausgang mit dem Eingang des Reglers (16) verbunden ist.

6. Vorrichtung nach Anspruch 5, dadurch gekennzeichet, dass die Steuereinrichtung (12) ein Frequenzumrichter ist.

7. Vorrichtung nach Anspruch 6, dadurch gekennzeichet, dass der Frequenzumrichter intern mit einem Leistungsmessgerät (14) ausgerüstet ist.

8. Vorrichtung nach einem der Ansprüche 5 bis 7, dadurch gekennzeichet, dass der Regler (16) unter Verwendung eines digitalen Regelgeräts realisiert ist.

9. Vorrichtung nach einem der Ansprüche 5 bis 8, dadurch gekennzeichet, dass die Kreiselarbeitsmaschine (6) Leistungskennlinien mit streng monotonem Verlauf aufweist.
